# EUROPÄISCHE PATENTSCHRIFT

(11) **EP 1 861 855 B1**
(45) Veröffentlichungstag und Bekanntmachung des Hinweises auf die Patenterteilung: **26.08.2015**
(21) Anmeldenummer: 06704755.5
(22) Anmeldetag: 17.03.2006
(51) Int. Cl.: G21B 1/00

(54) **ERSTE-WAND-KOMPONENTE FÜR FUSIONSREAKTOR**
FIRST WALL COMPONENT FOR A FUSION REACTOR
COMPOSANT DE PREMIERE PAROI POUR UN REACTEUR DE FUSION

(30) Priorität: 22.03.2005 AT 17905 U
(43) Veröffentlichungstag der Anmeldung: 05.12.2007
(73) Patentinhaber: The European Atomic Energy Community (EURATOM), represented by the European Commission, 1049 Brussels (BE)
(72) Erfinder: FRIEDRICH, Thomas, 87642 Halblech (DE); PLANKENSTEINER, Arno, A-6600 Reute (AT); SCHEDLER, Bertram, A-6600 Reutte (AT); SCHEIBER, Karlheinz, A-6600 Breitenwang (AT); FRIEDLE, Hans-Dieter, A-6651 Häselgehr (AT); HUBER, Thomas, A-6600 Breitenwang (AT); SCHEDLE, Dietmar, A-6600 Reutte (AT); ZABERNIG, Anton, A-6600 Reutte (AT)
(74) Vertreter: Office Freylinger
(86) Internationale Anmeldenummer: PCT/AT2006/000113
(87) Internationale Veröffentlichungsnummer: WO 2006/099643

(56) Entgegenhaltungen:
- GB-A- 1 089 391
- US-A- 5 182 075
- US-A- 5 740 955
- US-A1- 2004 195 296
- "Copper - WebElements: the periodic table on the web", , pages 1-5, Retrieved from the Internet: URL:http://www.webelements.com/copper/phys ics.html [retrieved on 2013-02-11]

## Beschreibung

Die Erfindung betrifft eine Erste-Wand-Komponente eines Fusionsreaktors, die zumindest ein Hitzeschild mit einer geschlossenen oder offenen Durchführung aus einem grafitischen Werkstoff und ein Kühlmittel durchflossenes, mit dem Hitzeschild zumindest teilweise stoffschlüssig verbundenes Kühlrohr aus einem Werkstoff mit einer thermischen Leitfähigkeit > 200 W/m·K umfasst.

Ein typisches Beispiel für den Einsatz derartiger Erste-Wand-Komponenten sind Divertor und Limiter, die höchsten thermischen Belastungen von über 10 mW/m² ausgesetzt sind. Erste-Wand-Komponenten bestehen üblicherweise aus einem Hitzeschild und einem Wärme abführenden Bereich. Der Werkstoff des Hitzeschildes muss mit dem Plasma kompatibel sein, eine hohe Resistenz gegenüber physikalischem und chemischem Sputtern aufweisen, einen hohen Schmelzpunkt / Sublimationspunkt besitzen und gegenüber Thermoschock möglichst beständig sein. Daneben müssen sie noch eine hohe thermische Leitfähigkeit, geringe Neutronen Aktivierbarkeit und ausreichende Festigkeit / Bruchzähigkeit aufweisen, bei guter Verfügbarkeit und akzeptablen Kosten. Neben Refraktärmetallen, wie beispielsweise Wolfram, erfüllen grafitische Werkstoffe (z.B. faserverstärkter Grafit) dieses vielfältige und zum Teil gegenläufige Anforderungsprofil am besten. Da die Energieströme aus dem Plasma über einen längeren Zeitraum auf diese Komponenten einwirken, werden derartige Erste-Wand-Komponenten typischerweise aktiv gekühlt. Die Wärmeabfuhr wird durch Wärmesenken, beispielsweise aus Kupfer oder Kupferlegierungen unterstützt, die mit dem Hitzeschild üblicherweise formschlüssig verbunden sind.

Erste-Wand-Komponenten können mit unterschiedlichem Design ausgeführt werden (siehe z.B. Dokument US-A-5740955). Ein übliches Design ist dabei das so genannte Monoblock-Design. Beim Monoblock-Design besteht die Erste-Wand-Komponente aus einem Hitzeschild mit konzentrischer Bohrung. Über diese konzentrische Bohrung ist der Hitzeschild mit dem Kühlrohr verbunden.

Erste-Wand-Komponenten müssen nicht nur thermisch induzierte, sondern auch zusätzlich auftretende mechanische Spannungen ertragen. Solche zusätzlichen, mechanischen Lasten können über elektromagnetisch induzierte Ströme erzeugt werden, die in den Komponenten fließen und mit dem Magnetfeld der Umgebung in Wechselwirkung treten. Dabei können hochfrequente Beschleunigungskräfte auftreten, die vom Hitzeschild, also beispielsweise vom grafitischen Werkstoff, übertragen werden müssen. Grafitische Werkstoffe weisen jedoch eine geringe mechanische Festigkeit und Bruchzähigkeit auf. Zusätzlich tritt während des Einsatzes Neutronenversprödung auf, wodurch es zu einer weiteren Erhöhung der Empfindlichkeit dieser Werkstoffe gegenüber Risseinleitung kommt.

Als grafitischer Werkstoff kommt üblicherweise faserverstärkter Grafit (CFC) zum Einsatz. Die Faserverstärkung ist dabei dreidimensional und linear angeordnet. Die Architektur der Fasern gibt dem Werkstoff je nach Raumrichtung unterschiedliche Eigenschaften. CFC ist üblicherweise in einer Raumrichtung durch Ex-Pitch Fasern verstärkt, die sowohl die höchste Festigkeit als auch Wärmeleitfähigkeit aufweisen. Die beiden anderen Raumrichtungen sind durch Ex-PAN Fasern verstärkt, wobei eine Richtung typischer Weise nur vernadelt ist.

Während also CFC eine lineare Werkstoffarchitektur aufweist, ist die Verbindungsgeometrie Hitzeschild / Kühlrohr zirkular. Auf Grund der unterschiedlichen Wärmeausdehnungskoeffizienten der verwendeten Werkstoffe kommt es beim Herstellprozess zu einem Spannungsaufbau, die zu Rissen im CFC führen können. Diese Risse sind auf Grund der geometrischen Gegebenheiten und der verwendeten Werkstoffkombination, wenn überhaupt, nur mit sehr aufwendigen Methoden detektierbar. Dies wirft vor dem Hintergrund einer nuklearen Umgebung für solche Komponenten entsprechende Probleme auf, vor allem auch deshalb, weil Risse / Ablösungen als möglicher Auslöser für einen größeren Störfall gesehen werden.

Trotz jahrelanger aufwendiger Entwicklungstätigkeit auf dem Gebiet von Erste-Wand-Komponenten erfüllen die bis dato vorliegenden Bauteile das Anforderungsprofil nicht in optimaler Weise.

Aufgabe der Erfindung ist es daher eine Erste-Wand-Komponente bereit zu stellen, die den aus mechanischen Beanspruchungen resultierenden Anforderungen in geeigneter Weise gerecht wird.

Gelöst wird diese Aufgabe gemäß den Merkmalen von Anspruch 1.

Die Erste-Wand-Komponente umfasst zumindest ein Hitzeschild aus einem grafitischen Werkstoff mit einer dem Plasma zugeneigten Fläche A und einer dazu gegenüberliegenden Fläche B. Der Hitzeschild weist einen oder mehrere Schlitze auf, die in die Fläche A oder B münden und, in Richtung der Achse des Kühlrohres betrachtet, im Wesentlichen über die Länge des Hitzeschildes laufen. Es ist weiters vorteilhaft, dass die maximale Schlitzbreite im Bereich des Schlitzgrundes D/2 nicht übersteigt, wobei D der Außendurchmesser des Kühlrohres ist. Versuche, die in den Beispielen näher ausgeführt sind, haben gezeigt, dass die erfindungsgemäßen Komponenten sowohl die aus der Herstellung als auch aus einem thermischen Zyklieren resultierenden mechanischen Beanspruchungen in geeigneter Weise gerecht werden.

Der Schlitz verläuft vorteilhafterweise annähernd senkrecht zur Fläche A bzw. B. Die Schlitztiefe wiederum ist vorteilhafterweise größer als der halbe Abstand zwischen A bzw. B und der nächstliegenden Oberfläche des Kühlrohrs. Ein besonders günstiger Bereich für die Schlitztiefe x beträgt u/2 ≤ x ≤ 9u/10, wobei u der Abstand in senkrechter Richtung gemessen zwischen der Fläche A bzw. B und der nächstliegenden Kühlrohroberfläche ist. Der Schlitz kann jedoch auch bis zum Kühlrohr oder bis zu einer das Kühlrohr umhüllenden duktilen Schicht reichen. In diesem Fall weist der Hitzeschild keine geschlossene, sondern eine offene Durchführung auf. Da üblicherweise Kühlrohre mit Kreisquerschnitt Verwendung finden, weist auch die Durchführung einen kreisförmigen Querschnitt auf.

Die minimale Schlitzbreite von 10 µm ergibt sich aus den für grafitische Werkstoffe verfügbaren Schneidverfahren, wie Diamantsägeverfahren oder Drahtschneiden. Die bevorzugte maximale Schlitzbreite beträgt D/3. Um Spannungsspitzen im Schlitzgrund zu vermeiden, ist es vorteilhaft, wenn dieser einen Radius aufweist, der im Bereich 0,5 x Schlitzbreite liegt. Weiters ist es vorteilhaft, wenn der Schlitz in die Fläche B mündet, da beim Einsatz an der dem Plasma zugewandten Fläche im Bereich des Schlitzes leichte Erosion auftritt. Eine weitere vorteilhafte Ausführung ist die Einschlitz-Variante, wobei der Schlitz zum Kühlrohrmittelpunkt gerichtet ist. Auch die Anwendung von zwei oder drei Schlitzen, wie dies auch in den Beispielen im Detail dargestellt ist, reduziert in hohem Maße die bei der Herstellung und dem thermischen Zyklieren auftretenden Spannungen. Die Kombination von CFC für das Hitzeschild mit den erfindungsgemäßen Schlitzen führt besonders dann zu einem besonders günstigen kombinatorischen Effekt, wenn die Ex-Pitch Fasern annähernd senkrecht zur Fläche A, die Ex-PAN Fasern parallel zur Achse des Kühlrohres und die genadelten Ex-PAN Fasern radial zur Kühlrohrachse ausgerichtet sind. Aus wirtschaftlichen Gründen und auf Grund der hohen Wärmeleitfähigkeit ist die Verwendung von Kupferlegierungen für die Kühlrohre zu bevorzugen. Die Spannungen in der Komponente können weiters durch das Einbringen einer sehr weichen Schicht (Härte < 200 HV) zwischen Kühlrohr und Hitzeschild reduziert werden.

Die Erfindung wird im Folgenden durch Figur 1 bis 7 sowie den Beispielen exemplarisch dargestellt bzw. erläutert.
- Figur 1: zeigt im Schrägbild eine erfindungsgemäße Komponente mit einem Schlitz
- Figur 2: zeigt den Aufriss der Komponente gemäß Figur 1
- Figur 3: zeigt den Querschnitt der Komponente gemäß Figur 1 und weiters die CFC Faserrichtung
- Figur 4: zeigt im Schrägbild eine erfindungsgemäße Komponente mit zwei Schlitzen
- Figur 5: zeigt den Aufriss der Komponente gemäß Figur 4
- Figur 6: zeigt den Querschnitt der Komponente gemäß Figur 4 und weiters die CFC Faserrichtung
- Figur 7: zeigt den Aufriss einer erfindungsgemäßen Komponente mit V-förmigen Schlitz

### Beispiel 1

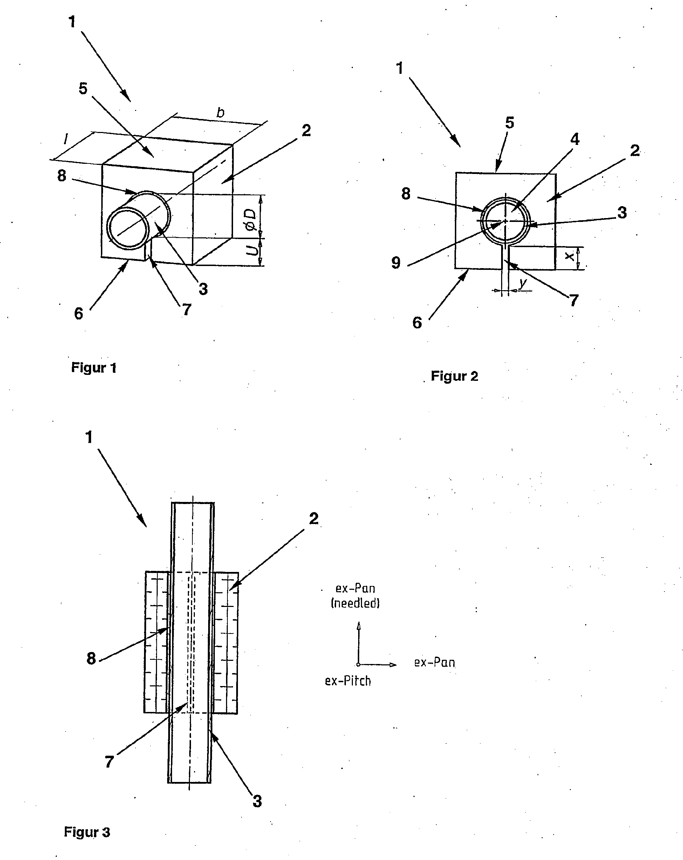

Eine Erste-Wand-Komponente -1- gemäß Figur 1 bis 3 wurde wie folgt hergestellt:
Hitzeschilder -2- in Form von Monoblöcken mit einer Bohrung -4- wurden aus faserverstärkten Graphitblöcken (CFC) herausgearbeitet, wobei die hochfesten Ex-Pitch Fasern in Richtung der höchsten Wärmeleitfähigkeit, die Ex-PAN Fasern parallel zur Achse des Kühlrohres und die genadelten Ex-PAN Fasern in Kühlrohrachse lagen. Die Abmessungen der einzelnen Monoblöcke waren 40 mm (Ex-Pitch), 30 mm (Ex-PAN) und 20 mm (Ex-PAN Needled). Der Durchmesser der Bohrung -4- war 14 mm und befand sich im Symmetriezentrum -9- des Hitzeschilds -2-. Vor der weiteren Verarbeitung wurde die Wandung der Bohrung -4- mittels LASER strukturiert, wodurch eine Vielzahl von kegelförmigen Löchern in den CFC eingebracht wurden. Typischerweise haben solche Löcher eine Tiefe von etwa 0,5 mm und eine Öffnung an der Oberfläche von 0,2 - 0,3 mm. Der Abstand wurde so gewählt, dass die Oberfläche der Bohrungswandung maximiert wurde. Auf der dem Plasma abgewandten Seite -6- wurde ein Schlitz -7- mit einer Schlitzbreite von 0,3 mm im Hitzeschild -2- mittels Drahtschneiden eingebracht. Dieser Schlitz -7- lag in der Symmetrieachse des Hitzeschilds -2- und lief von der dem Plasma abgewandten Oberfläche -6- bis in die zentral liegende Bohrung -4-. Anschließend wurde die Bohrung -4- über einen Gießprozess unter Anwesenheit eines Karbidbildners wie beispielsweise Titan mit sauerstofffreiem Kupfer ausgegossen. Der Prozess wurde so geführt, dass der zuvor eingebrachte 0,3 mm breite Schlitz -7- im Hitzeschild -2- während dieses Geißprozesses nicht durch Kupfer benetzt wurde. Nach dem Gießprozess weisen die Flanken des Schlitzes -7- einen im Vergleich zum Bearbeitungszustand geringeren Abstand auf. Dieser Umstand zeigte, dass die auftretenden Spannungen in Deformation umgesetzt wurden. Dies führte zu einer Spannungsreduktion, ohne dass die Funktionsfähigkeit und die günstigen Eigenschaften der Komponente -1- durch diese Maßnahme verloren gingen. Eine visuelle und metallografische Beurteilung des CFC/Cu Interfaces im hintergossenen Zustand ergab keinen Hinweise auf eventuelle Delaminationen im CFC/Kupfer Verbund.

Die so erhaltene mit Kupfer gefüllte Bohrung -4- wurde anschließend einer mechanischen Bearbeitung unterzogen, so dass eine Bohrung mit Durchmesser 12,5 mm und somit eine etwa 0,5 - 1,0 mm dicke Kupferschicht am CFC verblieb.

Drei auf diese Weise erhaltene Hitzeschilder -2- mit Schlitz -7- wurden auf ein Kühlrohr -3- aus einer CuCrZr-Legierung mit einem Durchmesser 12 mm aufgefädelt und in eine metallische Kanne eingebracht. Nach dem Verschweißen der Kanne wurde diese evakuiert und danach der Absaugstutzen vakuumdicht versiegelt. Die so eingekannten Komponenten wurden dann einem HIP Prozess bei 550°C und 1000 bar unterzogen. Während dieses Prozesses kam es zu einer stoffschlüssigen Verbindung zwischen dem CuCrZr-Rohr -3- und der Kupferschicht in der Bohrung -4- des CFC-Monoblocks -2-. Daneben erfolgte auch eine Aushärtung des CuCrZr-Materials, wodurch ausgezeichnete mechanische Eigenschaften im Kühlrohr -3- erreicht werden konnten. Nach dem Verbindungsprozess wurde die Kanne von der so erhaltenen Erste-Wand-Komponente -1- entfernt. Eine visuelle Beurteilung ergab keine Hinweise auf etwaige Fehler, wie zum Beispiel Delaminationen. Eine zusätzlich durchgeführte Ultraschallprüfung mit einer Innenrohrsonde zeigte ein perfektes Interface.

Zum Abschluss wurde diese Erste-Wand-Komponente -1- dem Plasma einer VPS-Anlage unterworfen. Die Komponente -1- wurde dabei an das in der Anlage vorhandene Kühlwassersystem angeschlossen und vom Greifarm des in der Anlage installierten Roboters gehalten. Mittels Strömungsgeschwindigkeit, Temperaturerhöhung des Kühlmediums und vom Plasma beaufschlagter Oberfläche -5- wurde ein Wärmefluss im Bereich von 10 - 15 MW/m² ermittelt. Insgesamt wurde die Komponente -1- etwa 100 x durch Bewegen durch das Plasma zykliert. Beim Bewegen wurde die Komponente -1- jeweils so lange im Plasma gehalten, bis sich die Temperatur des Kühlwassers nicht weiter erwärmte. Nach diesem Test wurde die Komponente -1- zerstörend geprüft. Es zeigte sich, dass sich bei keinem der untersuchten Hitzeschilder -2- ein Riss nachweisen ließ, ein Umstand, der bei nicht erfindungsgemäßen Komponenten noch nicht erreicht werden konnte.

### Beispiel 2

Eine weitere Komponente -1- wurde gemäß Beispiel 1 gefertigt. Bei der anschließenden Prüfung wurde die geschlitzte Oberfläche dem Plasma ausgesetzt. Der Test erbrachte ähnliche Ergebnisse wie bei Beispiel 1, mit dem Unterschied, dass im Bereich des Schlitzes -7- eine leichte Erosion stattfand.

### Beispiel 3

Eine Erste-Wand-Komponente -1- gemäß Figur 1 bis 3 wurde wie folgt hergestellt:

Hitzeschilder -2- in Form von Monoblöcken mit einer Bohrung -4- wurden aus faserverstärkten Graphitblöcken (CFC) herausgearbeitet, wobei wiederum die hochfesten Ex-Pitch Fasern in Richtung der höchsten Wärmeleitfähigkeit, die Ex-PAN Fasern parallel zur Achse des Kühlrohres und die genadelten Ex-PAN Fasern in Kühlrohrachse lagen. Die Abmessungen der einzelnen Monoblöcke entsprachen denen von Beispiel 1. Auch das Einbringen der Bohrung und der Laserstrukturierung erfolgten wie in Beispiel 1 beschrieben. Auf der dem Plasma abgewandten Seite -6- wurde ein Schlitz -7- mit einer Schlitzbreite von 0,3 mm im Hitzeschild -2- mittels Drahtschneiden eingebracht. Dieser Schlitz -7- lag auf der Symmetrieachse des Hitzeschilds -2- und durchbrach die Bohrung -4-. Anschließend wurde die Bohrung -4- analog Beispiel 1 mit sauerstofffreiem Kupfer ausgegossen, einer mechanischen Bearbeitung unterzogen, mit einem Kühlrohr -3- aus einer CuCrZr-Legierung mittels Löten verbunden, wobei die Löttemperatur im Bereich der Lösungsglühtemperatur (970°C) des CuCrZr lag. Die Abkühlung von Löttemperatur auf unter 400°C erfolgte mit einer Kühlrate > 1 K/sec, wodurch bei einer anschließende Auslagerung bei 475°C/3h optimale Festigkeitswerte eingestellt werden konnten. Auch die so hergestellten Verbunden zeigten nach dem thermischen Zyklieren gemäß Beispiel 1 keine Risse.

### Beispiel 3a

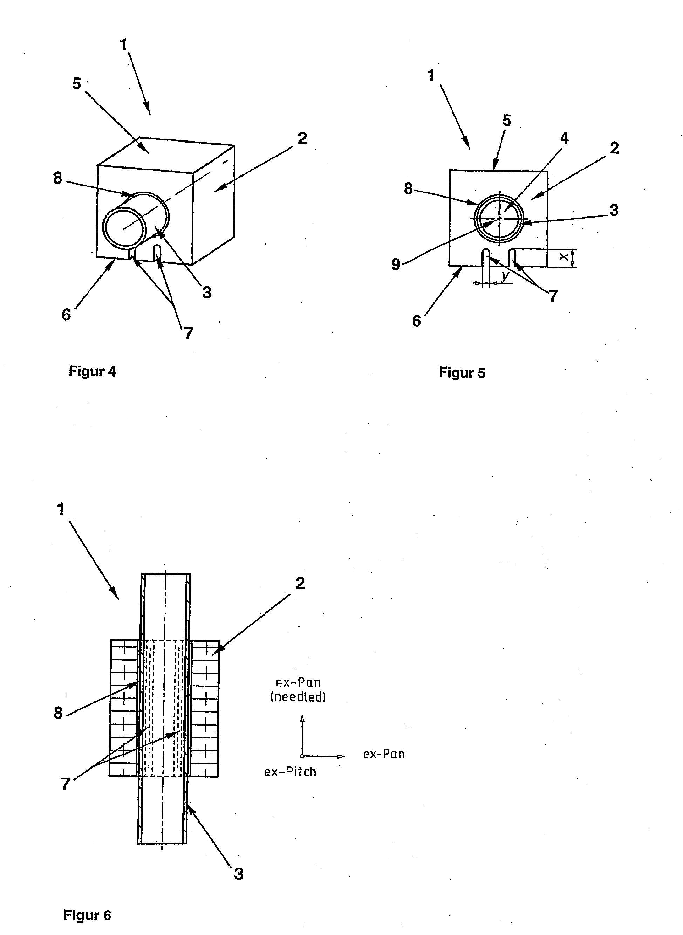

Eine Erste-Wand-Komponente -1- gemäß Figur 4 bis 6 wurde wie folgt hergestellt:
Hitzeschilder -2- in Form von Monoblöcken mit einer Bohrung -4- wurden aus faserverstärkten Graphitblöcken (CFC) herausgearbeitet, wobei wiederum die hochfesten Ex-Pitch Fasern in Richtung der höchsten Wärmeleitfähigkeit, die Ex-PAN Fasern parallel zur Achse des Kühlrohres und die genadelten Ex-PAN Fasern in Kühlrohrachse lagen. Die Abmessungen der einzelnen Monoblöcke entsprachen denen von Beispiel 1. Auch das Einbringen der Bohrung und die Laserstrukturierung erfolgten wie in Beispiel 1 beschrieben. Auf der dem Plasma abgewandten Seite -6- wurde zwei Schlitze -7- mit einer Schlitzbreite von 0,3 mm im Hitzeschild -2- mittels Drahtschneiden eingebracht. Diese Schlitze -7- lagen spiegelbildlich zur Symmetrieachse des Hitzeschilds -2-. Die Schlitze -7- wiesen jeweils eine Tiefe x von 0,8 u auf, wobei u der kleinste Abstand zwischen der Hitzeschildoberfläche -5- und dem Kühlrohr -3- ist. Anschließend wurde die Bohrung -4- analog Beispiel 1 mit sauerstofffreiem Kupfer ausgegossen, einer mechanischen Bearbeitung unterzogen, mit einem Kühlrohr -3- aus einer CuCrZr-Legierung mittels Löten entsprechend der Abfolge in Beispiel 3 stoffschlüssig verbunden. Auch die so hergestellten Verbunden zeigten nach dem thermischen Zyklieren gemäß Beispiel 1 keine Risse.

### Beispiel 4

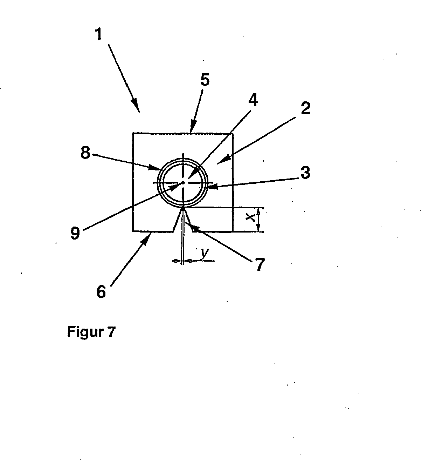

Eine Erste-Wand-Komponente -1- gemäß Figur 7 wurde wie folgt hergestellt: Monoblöcke wurden gemäß Beispiel 1 hergestellt. Auf der dem Plasma abgewandten Seite -6- wurde ein V-förmiger Schlitz -7-, wie in Figur 7 dargestellt mittels Drahtschneiden eingebracht. Die weiteren Fertigungsschritte erfolgten wie in Beispiel 1 beschrieben. Auch die so hergestellten Verbunde zeigten nach dem thermischen Zyklieren gemäß Beispiel 1 keine Risse.

## Patentansprüche

1. Erste-Wand-Komponente (1) eines Fusionsreaktors, die zumindest ein Hitzeschild (2) aus einem grafitischen Werkstoff und ein von Kühlmittel durchflossenes, mit dem Hitzeschild (2) zumindest teilweise stoffschlüssig verbundenes Kühlrohr (3) mit einem Außendurchmesser D aus einem Werkstoff mit einer thermischen Leitfähigkeit > 200 W/m·K umfasst, wobei der Hitzeschild (2) eine geschlossene oder offene Durchführung (4), eine dem Plasma zugeneigte Fläche A (5), eine dazu gegenüberliegende Fläche B (6), eine Länge l und eine Breite b aufweist,
**dadurch gekennzeichnet,**
**dass** der Hitzeschild (2) zumindest einen, im wesentlichen über die Länge l verlaufenden Schlitz (7), der in die Fläche A (5) oder B (6) mündet, aufweist.

2. Erste-Wand-Komponente (1) nach Anspruch 1, **dadurch gekennzeichnet, dass** die maximale Schlitzbreite y am Schlitzgrund D/2 beträgt.

3. Erste-Wand-Komponente (1) nach Anspruch 1 oder 2, **dadurch gekennzeichnet, dass** der in A (5) oder B (6) mündende Schlitz (7) im Wesentlichen senkrecht zur jeweiligen Fläche A (5) oder B (6) verläuft.

4. Erste-Wand-Komponente (1) nach einem der Ansprüche 1 bis 3, **dadurch gekennzeichnet, dass** der Schlitz (7) eine Tiefe x aufweist, mit u/2 ≤ x ≤ u, wobei u der kleinste Abstand zwischen der Hitzeschildoberfläche (5,6) und dem Kühlrohr (3) ist.

5. Erste-Wand-Komponente (1) nach Anspruche 4, **dadurch gekennzeichnet, dass** der Schlitz (7) bis zum Kühlrohr (3) reicht.

6. Erste-Wand-Komponente (1) nach einem der Ansprüche 1 bis 5, **dadurch gekennzeichnet, dass** die Schlitzbreite y am Schlitzgrund 10 µm < y < D/3 ist.

7. Erste-Wand-Komponente (1) nach einem der Ansprüche 1 bis 6, **dadurch gekennzeichnet, dass** der Schlitzgrund einen Radius aufweist.

8. Erste-Wand-Komponente (1) nach einem der Ansprüche 1 bis 7, **dadurch gekennzeichnet, dass** der Schlitz (7) in die Fläche B (6) mündet.

9. Erste-Wand-Komponente (1) nach einem der Ansprüche 1 bis 8, **dadurch gekennzeichnet, dass** der Hitzeschild (2) einen Schlitz (7) aufweist, wobei dieser in Richtung Mittelpunkt (9) des Kühlrohrs (3) ausgerichtet ist.

10. Erste-Wand-Komponente (1) nach einem der Ansprüche 1 bis 8, **dadurch gekennzeichnet, dass** der Hitzeschild (2) zwei Schlitze (7) aufweist, wobei diese spiegelbildlich zur Symmetrieebene angeordnet sind.

11. Erste-Wand-Komponente (1) nach einem der Ansprüche 1 bis 8, **dadurch gekennzeichnet, dass** der Hitzeschild (2) drei oder mehrere Schlitze (7) aufweist.

12. Erste-Wand-Komponente (1) nach einem der Ansprüche 1 bis 11, **dadurch gekennzeichnet, dass** der Hitzeschild (2) aus faserverstärktem Grafit ist.

13. Erste-Wand-Komponente (1) nach Anspruch 12, **dadurch gekennzeichnet, dass** die Fasern mit höchster Festigkeit und der Schlitz (7) eine um maximal 20° abweichende Orientierung aufweisen.

14. Erste-Wand-Komponente (1) nach Anspruch 12 oder 13, **dadurch gekennzeichnet, dass** die Ex-Pitch Fasern annähernd senkrecht zur Fläche A, die Ex-PAN Fasern parallel zur Achse des Kühlrohres und die genadelten Ex-PAN Fasern radial zur Kühlrohrachse ausgerichtet sind.

15. Erste-Wand-Komponente (1) nach einem der Ansprüche 1 bis 14, **dadurch gekennzeichnet, dass** das Kühlrohr (3) aus einer Kupferlegierung gefertigt ist.

16. Erste-Wand-Komponente (1) nach einem der Ansprüche 1 bis 15, **dadurch gekennzeichnet, dass** zwischen Kühlrohr (3) und Hitzeschild (2) eine Schicht (8) aus Rein-Kupfer oder einer Kupferlegierung mit einer Festigkeit < 200 HV angeordnet ist.

## Claims

1. A first-wall component (1) of a fusion reactor, which first-wall component comprises at least one heat shield (2) consisting of a graphitic material and a cooling tube (3) with an outside diameter D, through which a coolant flows and which at least is partially material-bonded to the heat shield (2) and consists of a material with a thermal conductivity > 200 W/m·K, the heat shield (2) having a closed or open leadthrough (4), a face A (5) inclined toward the plasma, a face B (6) lying opposite this, a length 1 and a width b, **characterized in that** the heat shield (2) has at least one slot (7) which runs essentially over the length 1 and which ends in the face A (5) or B (6).

2. The first-wall component (1) as claimed in claim 1, **characterized in that** the maximum slot width y at the slot bottom is D/2.

3. The first-wall component (1) as claimed in claim 1 or 2, **characterized in that** the slot (7) ending in A (5) or B (6) runs essentially perpendicularly with respect to the respective face A (5) or B (6).

4. The first-wall component (1) as claimed in one of claims 1 to 3, **characterized in that** the slot (7) has a depth x, with u/2 ≤ x ≤ u, u being the smallest spacing between the heat shield surface (5, 6) and the cooling tube (3).

5. The first-wall component (1) as claimed in claim 4, **characterized in that** the slot (7) extends as far as the cooling tube (3).

6. The first-wall component (1) as claimed in one of claims 1 to 5, **characterized in that** the slot width y at the slot bottom is 10 µm < y < D/3.

7. The first-wall component (1) as claimed in one of claims 1 to 6, **characterized in that** the slot bottom has a radius.

8. The first-wall component (1) as claimed in one of claims 1 to 7, **characterized in that** the slot (7) ends in the face B (6).

9. The first-wall component (1) as claimed in one of claims 1 to 8, **characterized in that** the heat shield (2) has one slot (7), the latter being oriented in the direction of the center point (9) of the cooling tube (3).

10. The first-wall component (1) as claimed in one of claims 1 to 8, **characterized in that** the heat shield (2) has two slots (7), these being arranged mirror-symmetrically to the plane of symmetry.

11. The first-wall component (1) as claimed in one of claims 1 to 8, **characterized in that** the heat shield (2) has three or more slots (7).

12. The first-wall component (1) as claimed in one of claims 1 to 11, **characterized in that** the heat shield (2) consists of fiber-reinforced graphite.

13. The first-wall component (1) as claimed in claim 12, **characterized in that** the fibers with the highest strength and the slot (7) have an orientation deviating by at most 20°.

14. The first-wall component (1) as claimed in claim 12 or 13, **characterized in that** the Ex-pitch fibers are oriented approximately perpendicularly with respect to the face A, the Ex-PAN fibers are oriented parallel to the axis of the cooling tube and the needled Ex-PAN fibers are oriented radially with respect to the cooling tube axis.

15. The first-wall component (1) as claimed in one of claims 1 to 14, **characterized in that** the cooling tube (3) is manufactured from a copper alloy.

16. The first-wall component (1) as claimed in one of claims 1 to 15, **characterized in that** a layer (8) consisting of pure copper or of a copper alloy with a strength < 200 HV is arranged between the cooling tube (3) and heat shield (2).

## Revendications

1. Composant de première paroi (1) d'un réacteur de fusion, qui comprend au moins un bouclier thermique (2) constitué d'un matériau graphite et un tube de refroidissement (3) traversé par un réfrigérant et assemblé au bouclier thermique (2) au moins partiellement par liaison de matière de diamètre D en un matériau ayant une conductivité thermique > 200 W/m·K, le bouclier thermique (2) présentant un passage (4) fermé ou ouvert, une face A (5) orientée vers le plasma, une face B (6) opposée à celle-ci, une longueur l et une largeur b,
**caractérisé en ce que**
le bouclier thermique (2) comporte au moins une fente (7) s'étendant essentiellement sur la longueur l et débouchant dans la face A (5) ou B (6).

2. Composant de première paroi (1) selon la revendication 1, **caractérisé en ce que** la largeur maximale y de la fente au fond de la fente est égale à D/2.

3. Composant de première paroi (1) selon la revendication 1 ou 2, **caractérisé en ce que** la fente (7) débouchant dans A (5) ou B (6) est sensiblement perpendiculaire à la face respective A (5) ou B (6).

4. Composant de première paroi (1) selon l'une des revendications 1 à 3, **caractérisé en ce que** la fente (7) a une profondeur x, avec u/2 ≤ x ≤ u, u étant la plus petite distance entre la surface (5, 6) du bouclier thermique et le tube de refroidissement (3).

5. Composant de première paroi (1) selon la revendication 4, **caractérisé en ce que** la fente (7) va jusqu'au tube de refroidissement (3).

6. Composant de première paroi (1) selon l'une des revendications 1 à 5, **caractérisé en ce que** la largeur y de la fente au fond de la fente est égale à 10 µm < y < D/3.

7. Composant de première paroi (1) selon l'une des revendications 1 à 6, **caractérisé en ce que** le fond de la fente présente un rayon.

8. Composant de première paroi (1) selon l'une des revendications 1 à 7, **caractérisé en ce que** la fente (7) débouche dans la face B (6).

9. Composant de première paroi (1) selon l'une des revendications 1 à 8, **caractérisé en ce que** le bouclier thermique (2) comporte une fente (7), celle-ci étant orientée en direction du centre (9) du tube de refroidissement (3).

10. Composant de première paroi (1) selon l'une des revendications 1 à 8, **caractérisé en ce que** le bouclier thermique (2) comporte deux fentes (7), celles-ci étant disposées symétriquement au plan de symétrie.

11. Composant de première paroi (1) selon l'une des revendications 1 à 8, **caractérisé en ce que** le bouclier thermique (2) comporte trois ou plusieurs fentes (7).

12. Composant de première paroi (1) selon l'une des revendications 1 à 11, **caractérisé en ce que** le bouclier thermique (2) est en graphite renforcé par des fibres.

13. Composant de première paroi (1) selon la revendication 12, **caractérisé en ce que** les fibres de haute résistance et la fente (7) ont une orientation avec un écart maximal de 20°.

14. Composant de première paroi (1) selon la revendication 12 ou 13, **caractérisé en ce que** les fibres ex-PITCH sont orientées sensiblement perpendiculairement à la face A, les fibres ex-PAN sont orientées parallèlement à l'axe du tube de refroidissement et les fibres ex-PAN aiguilletées sont orientées radialement à l'axe du tube de refroidissement.

15. Composant de première paroi (1) selon l'une des revendications 1 à 14, **caractérisé en ce que** le tube de refroidissement (3) est réalisé en un alliage de cuivre.

16. Composant de première paroi (1) selon l'une des revendications 1 à 15, **caractérisé en ce qu'**entre tube de refroidissement (3) et bouclier thermique (2) est placée une couche (8) constituée de cuivre pur ou d'un alliage de cuivre présentant une résistance mécanique < 200 HV.
